# EUROPÄISCHE PATENTSCHRIFT

(11) **EP 1 441 165 B1**
(45) Veröffentlichungstag und Bekanntmachung des Hinweises auf die Patenterteilung: **31.05.2006**
(21) Anmeldenummer: 03029142.1
(22) Anmeldetag: 18.12.2003
(51) Int. Cl.: F16L 13/04, B21D 39/04

(54) **Pressverbindungsanordnung**
Press-connection arrangement
Raccord à sertir

(30) Priorität: 22.01.2003 DE 20300918 U
(43) Veröffentlichungstag der Anmeldung: 28.07.2004
(73) Patentinhaber: VIEGA GmbH & Co. KG., 57439 Attendorn (DE)
(72) Erfinder: Viegener, Walter, 57439 Attendorn (DE)
(74) Vertreter: Cohausz & Florack

(56) Entgegenhaltungen:
- EP-A- 0 922 896
- EP-A- 1 081 423
- GB-A- 1 321 652
- US-A- 5 007 667

## Beschreibung

Die vorliegende Erfindung betrifft eine Pressverbindungsanordnung, insbesondere für den Installationsbereich, mit einem an einem Fitting oder einer Armatur ausgebildeten durch Kaltumformung verpressbaren Abschnitt, an dem ein ringförmiger Wulst zur Aufnahme eines Dichtringes angeformt ist und ein Ende eines Rohres eingesteckt ist.

Aus der EP 0 343 395 ist eine Pressverbindungsanordnung bekannt, bei der ein Fitting oder eine Armatur einen verpressbaren Abschnitt aufweist, in den ein Ende eines Rohres eingesteckt ist. An dem durch Kaltumformung verpressbaren Abschnitt ist ein Wulst mit einem Dichtring angeordnet. Beim Verpressen wird der Wulst radial nach innen gedrückt, so dass der Dichtring klemmend an dem Rohr anliegt und für eine dauerhafte Abdichtung der Pressverbindung sorgt. Auch die Bereiche benachbart zu dem Wulst werden verpresst, so dass das Rohr gegen ein axiales Herausziehen gesichert ist.

Ferner ist aus der DE 100 07 914 eine Pressverbindungsanordnung bekannt, bei der an einem verpressbaren Abschnitt eine Wulst vorgesehen ist, an der eine Ausbeulung angeformt ist, damit im unverpressten Zustand eine gewollte Leckage vorhanden ist. Erst durch Verpressen der Ausbeulung wird eine Abdichtung erreicht. Nachteilig bei dieser Pressverbindungsanordnung ist, dass die Herstellung der Ausbeulung relativ aufwendig ist und meist einen gesonderte Arbeitsgang erfordert.

Die US-A-5007667 offenbart eine Rohrverbindung, bei der in einem verpressbaren Fitting ein Rohrende eingesteckt ist, wobei ein Dichtring in einem Wulst des Fittings aufgenommen ist. Der Innendurchmesser des Dichtringes ist dabei größer bemessen als der Außendurchmesser des Rohrendes, so dass im unverpressten Zustand ein Spalt vorhanden ist.

Die GB 1321652 offenbart eine Rohrkupplung, bei der ein verpressbares Zwischenstück vorgesehen ist, in das von gegenüberliegenden Seiten je ein Rohrende eingesteckt ist. An dem Zwischenstück sind dabei Aufnahmen für Dichtelemente ausgebildet. Im unverpressten Zustand ist ein Spalt zwischen Dichtelementen und Rohrenden vorhanden.

Schließlich ist in der EP 1081423 ein Verfahren zum Herstellen einer Pressverbindung zwischen einem Fitting und einem in eine mit einem Dichtungsring versehene Aufnahme des Fittings bis zu einem Anschlag eingeschobenen Rohrende bekannt. Dabei wird vor dem Einschieben des Rohrendes oder während des Einschiebens des Rohrendes in die Aufnahme des Fittings der Dichtungsring von der Innenkontur aus durch mindestens ein eingesetztes Formteil elastisch verformt, und dann das Rohrende bis zum Anschlag eingeschoben und die Kaltverformung der zu verbindenden Teile vorgenommen. Erst im verpressten Zustand wird eine Abdichtung der Pressverbindung erreicht.

Es ist daher Aufgabe der vorliegenden Erfindung, eine Pressverbindungsanordnung zu schaffen, die bei einfachem Aufbau gewährleistet, dass im unverpressten Zustand eine gewollte Leckage vorhanden ist.

Diese Aufgabe wird mit einer Pressverbindungsanordnung mit den Merkmalen des Anspruches 1 gelöst.

Erfindungsgemäß ist der Dichtring derart in dem Wulst aufgenommen, dass im unverpressten Zustand ein Spalt zur Bildung eines Strömungskanals zwischen Dichtring und Rohr vorhanden ist, der durch Verpressen des Wulstes dann abdichtbar ist. Dabei ist an dem Wulst benachbart zur inneren Wand des verpressbaren Abschnittes zumindest an einer Seite eine hervorstehende Nase ausgebildet, die teilweise an der inneren Umfangsfläche des Dichtringes anliegt und den Dichtring in dem Wulst hält.

Diese Anordnung des Dichtringes im Wulst gewährleistet, dass sicher eine gewollte Leckage vor dem Verpressen vorhanden ist, und zwar auch, wenn durch Druckstöße oder hohe Medium-Fließgeschwindigkeiten der Dichtring aus dem Wulst gedrückt würde. Der Dichtring liegt eingefasst im Wulst an, und sorgt somit zuverlässig für einen Strömungskanal zwischen Dichtring und Rohr bei allen auftretenden Drücken und Fließgeschwindigkeiten. Erst durch Verpressen des Wulstes, der dann umlaufend radial nach innen verformt wird, liegt der Dichtring dann an dem Rohr an und dichtet die Verbindung ab. Da der Dichtring aus komprimierbarem Material gebildet ist, können kleinere Formänderungen ohne weiteres kompensiert werden.

Vorzugsweise ist der Dichtring in radialer Richtung mit Vorspannung in dem Wulst gehalten. Dadurch wird nach der Montage verhindert, dass der Dichtring versehentlich aus dem Wulst herausfallen oder beim Einschieben des Rohres herausgedrückt wird. Durch die Vorspannung liegt der Dichtring leicht klemmend in dem Wulst.

Es ist auch möglich, die äußere Umfangsfläche des Dichtringes formschlüssig in dem Wulst zu halten. Die äußere Umfangsfläche des Dichtringes wird durch denjenigen Bereich gebildet, der von einer Mittelebene des Querschnitts in radialer Richtung weiter nach außen liegt. Die formschlüssige Aufnahme gewährleistet, dass der Dichtring nach der Montage nicht verrutschen kann.

Gemäß einer weiteren Ausführungsform der Erfindung steht der Dichtring gegenüber der inneren Wand des verpressbaren Abschnittes geringfügig hervor, vorzugsweise um weniger als 25 % des Durchmessers des Querschnittes des Dichtringes. Sofern der Dichtring um einen größeren Teil gegenüber der inneren Wand des verpressbaren Abschnittes hervorsteht, besteht die Gefahr, dass beim Einschieben des Rohres der Dichtring abgeschert wird oder eine scharfe Kante des Rohres den Dichtring beschädigt. Wenn der Dichtring somit nur geringfügig hervorsteht, beispielsweise zwischen 10 und 20 % seines Durchmessers, kann das Rohrende nicht mehr frontal auf den Dichtring anschlagen, sondern allenfalls mit einer Kante an einem schräg verlaufenden Bereich des Dichtringes auftreffen, was jedoch vergleichsweise ungefährlich ist, da der Dichtring dann eine Führung für das Rohrende bildet und gegebenenfalls auch komprimierbar ist, um eine Beschädigung zu vermeiden.

Vorzugsweise ist der Dichtring klemmend in dem Wulst festgelegt, so dass ein versehentliches Herausdrücken des Dichtringes nicht möglich ist.

Wenn an der inneren Seite des Wulstes beidseitig eine hervorstehende Nase ausgebildet ist und der Abstand zwischen den Nasen kleiner als der Durchmesser des Dichtringes ist, kann der Dichtring nur noch über eine Komprimierung wieder aus dem Wulst entfernt werden. Denn die Nasen sorgen dafür, dass der Dichtring in etwa mit der Hälfte seines kreisförmigen Querschnittes umgriffen ist und daher durch den Engpass zwischen den Nasen nur durch größere Kräfte durchgeführt werden kann. Beim Verpressen wird dann das Material des Dichtringes gezielt zwischen den beiden Nasen durchgeführt.

Die Erfindung wird nachfolgend anhand von zwei Ausführungsbeispielen mit Bezug auf die beigefügten Zeichnungen näher erläutert.

Es zeigen:
- Fig. 1: eine geschnittene Seitenansicht eines Ausführungsbeispieles einer Pressverbindungsanordnung bei der Montage;
- Fig. 2: eine geschnittene Seitenansicht der Pressverbindungsanordnung der Fig. 1 vor dem Verpressen;
- Fig. 3: eine geschnittene Seitenansicht der Pressverbindungsanordnung der Fig. 1 nach dem Verpressen;
- Fig. 4: eine vergrößerte Detailansicht des Bereichs des Dichtringes vor dem Verpressen, und
- Fig. 5: eine vergrößerte Detailansicht des Bereichs des Dichtringes vor dem Verpressen gemäß einem zweiten Ausführungsbeispiel.

Eine Pressverbindungsanordnung umfasst ein Rohr 1, das in einen Fitting 2 oder eine Armatur eingesteckt wird. Das Rohr 1 kann aus Kunststoff, Metall, insbesondere Kupfer oder Edelstahl, oder einem Verbundwerkstoff bestehen. Ferner kann in dem Rohr 1 eine Stützhülse zur Verstärkung eingefügt sein.

Der Fitting 2 umfasst einen verpressbaren Abschnitt 3, der durch Kaltumformung auf das Rohr 1 aufpressbar ist. An dem verpressbaren Abschnitt 3 ist ein Wulst 4 vorgesehen, in dem ein Dichtring 5 aus elastischem Material eingefügt ist. Das Rohr 1 wird bis zu einem Anschlag 6 eingesteckt, der durch einen radial nach innen hervorstehende Schulter an dem Fitting 2 ausgebildet ist. Benachbart zu dem Anschlag 6 ist ein Gewinde 7 vorgesehen, an dem ein weiteres Bauteil festlegbar ist. Der verpressbare Abschnitt 3 kann jedoch statt an dem gezeigten Fitting 2 auch an anderen Fittings, Armaturen, T-Stücken oder dergleichen angeordnet sein.

An dem verpressbaren Abschnitt 3 ist ferner eine Aufnahme 9 vorgesehen, die durch einen zylindrischen Abschnitt 8 von dem Wulst 4 beabstandet ist. Die Aufnahme 9 wird endseitig durch eine Kröpfung 10 begrenzt. In der Aufnahme 9 ist ein Halteelement 15 positioniert, das beim Verpressen ebenfalls auf das Rohr 1 gedrückt wird.

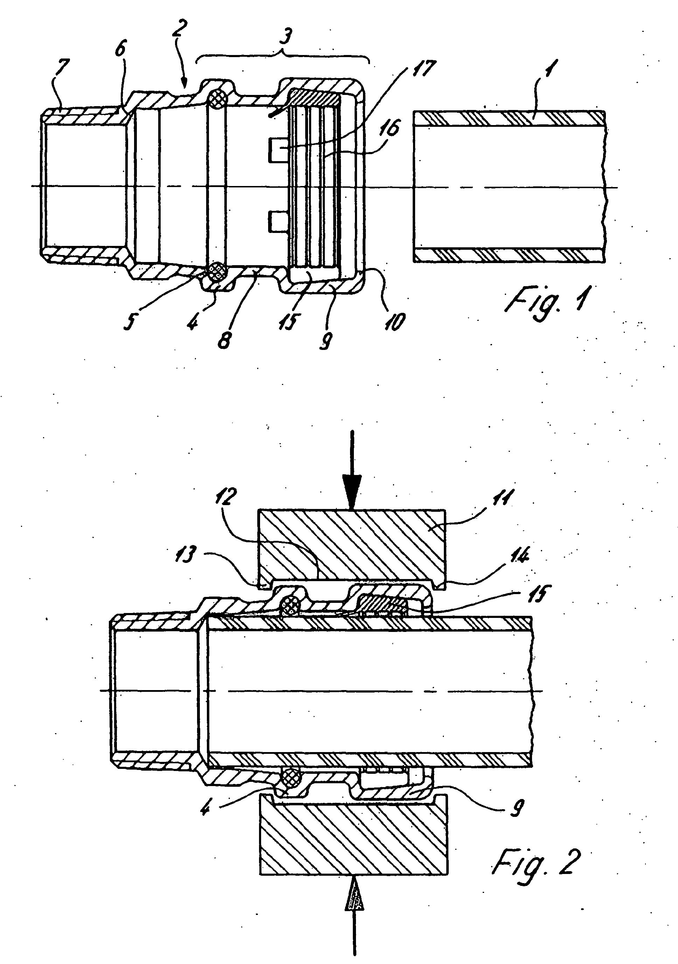

Wie in Fig. 2 erkennbar ist, wird mittels eines Presswerkzeuges 11 der verpressbare Abschnitt 3 zur Herstellung einer Pressverbindung deformiert. Das Presswerkzeug 11 weist Pressbacken mit einer ringförmig umlaufenden Pressfläche 12 auf, wobei die Pressbacken aufeinander gedrückt werden können, wie dies durch die Pfeile dargestellt ist. Seitlich zu der Pressfläche 12 sind hervorstehende Vorsprünge 13 und 14 vorgesehen, die für eine korrekte Positionierung des Presswerkzeuges 11 sorgen. Der Vorsprung 13 umgreift den Wulst 4, während der Vorsprung 14 endseitig die Aufnahme 9 umgreift.

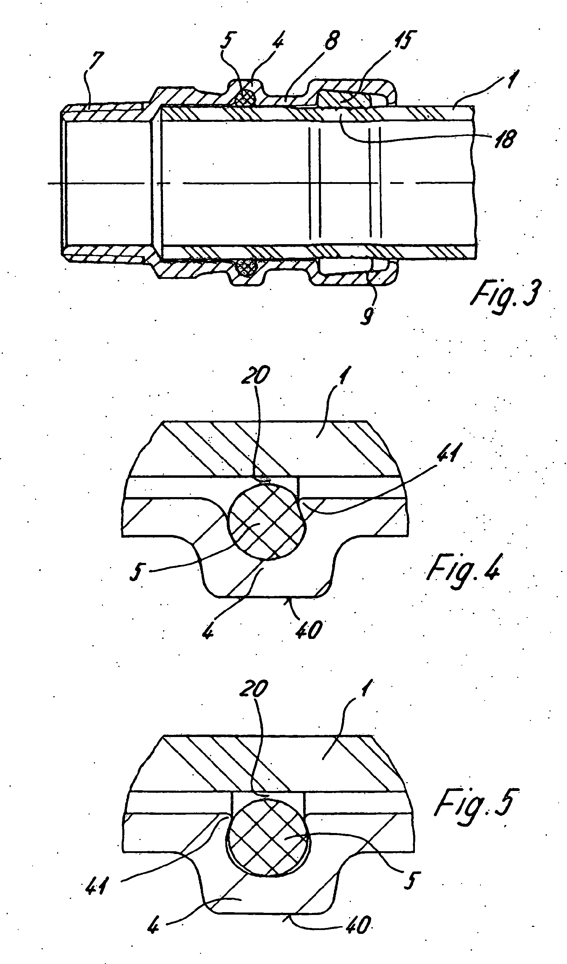

In Fig. 3 ist die Pressverbindungsanordnung im verpressten Zustand gezeigt. Durch das Verpressen ist der Wulst 4 radial nach innen gedrückt, und der Dichtring 5 liegt dichtend an dem Rohr 1 an. Zur axialen Sicherung ist auch die Aufnahme 9 radial nach innen verformt, und das Halteelement 15 drückt gegen das Rohr 1, wobei eine leichte radiale Verformung 18 im Bereich des Halteelementes 15 entstehen kann. Das Halteelement 15 weist dabei Haltezähne 16 auf, die sich in das Material des Rohres 1 eingraben. Ferner sind an dem Halteelement 15 Laschen 17 zur Vorfixierung des Rohres 1 zwischen dem zylindrischen Abschnitt 8 und dem Rohr 1 vorgesehen. Durch die keilförmige Ausbildung der äußeren Umfangsfläche des Halteelementes 15 wird eine besonders gute Sicherung gegen axiales Verschieben des Rohres 1 erreicht.

In Fig. 4 ist der Bereich des Dichtringes 5 in dem Wulst 4 vor dem Verpressen im Detail gezeigt. Zwischen dem Dichtring 5 und dem Rohr 1 ist ein Spalt 20 ausgebildet, der bei einem Vergessen des Verpressens eine gewollte Leckage erzeugt und ein Fluid durchströmen lässt. Erst durch ein Verpressen des Wulstes 4 auf eine äußere ebene Umfangsfläche 40 wird der Dichtring 5 radial nach innen gedrückt und derart komprimiert, dass er für eine Abdichtung des Spaltes 20 sorgt.

Der Dichtring 5 steht dabei im unverpressten Zustand über die innere Umfangsfläche des verpressbaren Abschnittes 3 nur geringfügig hervor, so dass bei einer Montage des Rohres 1 eine Beschädigung des Dichtringes 5 oder ein versehentliches Herausdrücken sicher vermieden wird.

Zusätzlich ist an dem Wulst 4 eine hervorstehende Nase 41 ausgebildet, die im Bereich der inneren Umfangsfläche des verpressbaren Abschnittes 3 angeordnet ist. Die Nase 41 liegt daher an einem Abschnitt des Dichtringes an, der auf der schon auf dem inneren zu dem Rohr 1 gewandten Bereiches der Umfangsfläche liegt. Dadurch wird der Dichtring 5 besonders gut in dem Wulst 4 gehalten. Durch die Nase 41 wird der Dichtring 5 leicht verformt und liegt somit klemmend in dem Wulst 4 an.

Bei dem in Figur 5 gezeigten Ausführungsbeispiel ist an dem Wulst 4 beidseitig eine hervorstehende Nase 41 vorgesehen. Die übrigen Bauteile entsprechen dem vorangegangenen Ausführungsbeispiel. Der Spalt zwischen den hervorstehenden Nasen 41 ist dabei kleiner als der Durchmesser des Querschnittes des Dichtringes 5. Dadurch kann der Dichtring 5 nach Art einer Rastverbindung in dem Wulst 4 festgelegt werden, und es wird sicher verhindert, dass der Dichtring 5 nicht versehentlich wieder aus dem Wulst 4 entfernt wird. Vor dem Verpressen ist ein Spalt 20 zwischen dem Rohr 1 und dem Dichtring 5 gebildet. Beim Verpressen gegen eine ebene äußere Umfangsfläche 40 wird das Material des Dichtringes 5 zwischen den Nasen 41 zusammen mit dem Wulst 4 gegen das Rohr 1 gedrückt und sorgt somit für eine Abdichtung.

Bei dem gezeigten Ausführungsbeispiel weist der verpressbare Abschnitt 3 neben dem Wulst 4 noch eine Aufnahme 9 für ein Halteelement 15 auf. Es ist auch möglich, die Aufnahme 9 wegzulassen und ein oder zwei Bereiche benachbart zu dem Wulst 4 zu verpressen, um eine Sicherung gegen axiales Herausziehen des Rohres 1 nach dem Verpressen zu erhalten.

Bei Einsatz eines Verbund- oder Kunststoffrohres ist es möglich, eine Stützhülse in an sich bekannter Weise in das Rohr einzufügen. Ferner kann die Form des Presswerkzeuges 11 variiert werden, beispielsweise kann nur der Wulst 4 ringförmig verpresst werden, während andere Bereiche des verpressbaren Abschnittes 3 mit einer anderen Kontur verpresst werden, um auch eine Verbindungssicherung des Rohres 1 mit dem Fitting 2 beim Verpressen herzustellen.

## Patentansprüche

1. Pressverbindungsanordnung, insbesondere für den Installationsbereich, mit einem an einem Fitting (2) oder einer Armatur durch Kaltumformung verpressbaren Abschnitt (3), an dem ein ringförmiger Wulst (4) zur Aufnahme eines Dichtringes (5) angeformt ist und ein Ende eines Rohres (1) eingesteckt ist, wobei der Dichtring (5) derart in dem Wulst (4) aufgenommen ist, dass im unverpressten Zustand ein Spalt (20) zur Bildung eines Strömungskanals zwischen Dichtring (5) und Rohr (1) vorhanden ist, der durch Verpressen des Wulstes (4) abdichtbar ist, **dadurch gekennzeichnet, dass** an dem Wulst (4) benachbart zur inneren Wand des verpressbaren Abschnittes (3) zumindest an einer Seite eine hervorstehende Nase (41) ausgebildet ist, die teilweise an der inneren Umfangsfläche des Dichtringes (5) anliegt und den Dichtring (5) in dem Wulst (4) hält.

2. Pressverbindungsanordnung nach Anspruch 1, **dadurch gekennzeichnet, dass** der Dichtring (5) in radialer Richtung mit Vorspannung in dem Wulst (4) gehalten ist.

3. Pressverbindungsanordnung nach Anspruch 1 oder 2, **dadurch gekennzeichnet, dass** die äußere Umfangsfläche des Dichtringes (5) formschlüssig in dem Wulst (4) gehalten ist.

4. Pressverbindungsanordnung nach einem der Ansprüche 1 bis 3, **dadurch gekennzeichnet, dass** der Dichtring (5) gegenüber der inneren Wand des verpressbaren Abschnittes nur geringfügig hervorsteht, vorzugsweise um weniger als 25 % des Durchmessers des Querschnittes des Dichtringes (5).

5. Pressverbindungsanordnung nach einem der Ansprüche 1 bis 4, **dadurch gekennzeichnet, dass** mittels der an der inneren Umfangsfläche des Dichtringes (5) anliegenden Nase (41) des Wulstes (4) der Dichtring (5) klemmend in dem Wulst (4) festgelegt ist.

6. Pressverbindungsanordnung nach einem der Ansprüche 1 bis 5, **dadurch gekennzeichnet, dass** an der inneren Seite des Wulstes (4) beidseitig hervorstehende Nasen (41) ausgebildet sind und der Abstand zwischen den Nasen (41) kleiner als der Durchmesser des Querschnittes des Dichtringes (5) ist.

7. Pressverbindungsanordnung nach einem der Ansprüche 1 bis 6, **dadurch gekennzeichnet, dass** an dem verpressbaren Abschnitt (3) eine Aufnahme (9) für ein Halteelement (15) zur axialen Sicherung des Rohres (1) ausgebildet ist.

## Claims

1. A press connection arrangement, especially for the field of installation, comprising a section (3) whereon an annular bead (4) is moulded for receiving a sealing ring (5) and an end of a pipe (1) is inserted, which section can be pressed on a fitting (2) or an armature by cold forming, wherein the sealing ring (5) is received in the bead (4) such that in the unpressed state a gap (20) for forming a flow channel is provided between sealing ring (5) and pipe (1) which can be sealed by pressing the bead (4), **characterised in that** formed on the bead (4) adjacent to the inner wall of the pressable section (3) at least on one side is a projecting lug (41) which abuts partly against the inner circumferential surface of the sealing ring (5) and holds the sealing ring (5) in the bead (4).

2. The press connection arrangement according to claim 1, **characterised in that** the sealing ring (5) is held in the radial direction with pre-stressing in the bead (4).

3. The press connection arrangement according to claim 1 or 2, **characterised in that** the outer circumferential surface of the sealing ring (5) is held positively in the bead (4).

4. The press connection arrangement according to any one of claims 1 to 3, **characterised in that** the sealing ring (5) projects only slightly compared to the inner wall of the pressable section, preferably by less than 25% of the diameter of the cross-section of the sealing ring (5).

5. The press connection arrangement according to any one of claims 1 to 4, **characterised in that** the sealing ring (5) is fixed by clamping in the bead (4) by means of the lug (41) of the bead (4) abutting against the inner circumferential surface of the sealing ring (5).

6. The press connection arrangement according to any one of claims 1 to 5, **characterised in that** bilaterally projecting lugs (41) are formed on the inner side of the bead (4) and the distance between the lugs (41) is smaller than the diameter of the cross-section of the sealing ring (5).

7. The press connection arrangement according to any one of claims 1 to 6, **characterised in that** a receptacle (9) for a retaining element (15) for axially securing the pipe (1) is formed on the pressable section (3).

## Revendications

1. Agencement de raccord à sertir, en particulier pour le domaine de la plomberie, comprenant une partie (3) d'un raccord ou d'un élément de robinetterie, pouvant être sertie par déformation à froid, partie sur laquelle est formée un boudin annulaire (4) destiné à recevoir un joint d'étanchéité (5), et dans laquelle est emboîtée une extrémité d'un tube (1), le joint d'étanchéité (5) étant reçu dans le boudin (4) de manière telle qu'à l'état non serti, un interstice (20) formant un canal d'écoulement entre le joint d'étanchéité (5) et le tube (1) existe, cet interstice pouvant être fermé de façon étanche par le sertissage du boudin (4),
**caractérisé en ce qu'**un nez proéminent (41) est aménagé dans le boudin (4), d'un côté au moins de celui-ci, de façon adjacente à la paroi intérieure de la partie à sertir (3), ce nez étant partiellement en contact avec la surface périphérique intérieure du joint d'étanchéité (5) et maintenant le joint d'étanchéité (5) à l'intérieur du boudin (4).

2. Agencement de raccord à sertir selon la revendication 1, **caractérisé en ce que** le joint d'étanchéité (5) est maintenu à l'intérieur du boudin (4) avec une précontrainte dans le sens radial.

3. Agencement de raccord à sertir selon l'une des revendications 1 ou 2, **caractérisé en ce que** la surface périphérique extérieure du joint d'étanchéité (5) est maintenue à l'intérieur du boudin (4) par conjugaison des formes.

4. Agencement de raccord selon l'une des revendications 1 à 3, **caractérisé en ce que** le joint d'étanchéité (5) ne dépasse que légèrement le niveau de la paroi intérieure de la partie à sertir, de préférence de moins de 25% du diamètre de la section transversale du joint d'étanchéité (5).

5. Agencement de raccord à sertir selon l'une des revendications 1 à 4, **caractérisé en ce que** le joint d'étanchéité (5) est immobilisé avec serrage dans le boudin (4) grâce au nez (41) venant en contact avec la surface périphérique intérieure du joint d'étanchéité (5).

6. Agencement de raccord à sertir selon l'une des revendications 1 à 5, **caractérisé en ce que** des nez (41) saillant depuis les deux côtés sont conformés à la face intérieure du boudin (4), et que la distance entre les nez (41) est inférieure au diamètre de la section transversale du joint d'étanchéité (5).

7. Agencement de raccord à sertir selon l'une des revendications 1 à 6, **caractérisé en ce qu'**un logement (9) pour un élément d'arrêt (15) assurant l'immobilisation axiale du tube (1) est formé dans la partie à sertir (3).
